# EUROPEAN PATENT APPLICATION

(11) **EP 4 480 616 A1**
(43) Date of publication of application: **25.12.2024**
(21) Application number: 23774981.7
(22) Date of filing: 22.03.2023
(51) Int. Cl.: B23K 3/04, B23K 1/00

(54) **BRAZING SYSTEM, BRAZING METHOD, AND PROGRAM**

(30) Priority: 22.03.2022 JP 2022045173
(71) Applicant: DAIKIN INDUSTRIES, LTD., Osaka-shi, Osaka 530-0001 (JP)
(72) Inventor: OSAWA, Masanori, Osaka-Shi, Osaka 530-0001 (JP); MORI, Daisuke, Osaka-Shi, Osaka 530-0001 (JP); TANAKA, Katsuya, Osaka-Shi, Osaka 530-0001 (JP); KISHIDA, Hiroshi, Osaka-Shi, Osaka 530-0001 (JP); KITAMURA, Masaki, Osaka-Shi, Osaka 530-0001 (JP)
(74) Representative: Goddar, Heinz J.
(86) International application number: PCT/JP2023/011336
(87) International publication number: WO 2023/182386

(57) **Abstract**

A brazing system includes: an image sensor configured to capture an image of a brazing material; and a control unit configured to control brazing, and the control unit generates brazing material information based on a shape of the brazing material in the image captured by the image sensor, detects completion of the brazing based on the brazing material information, and outputs a completion signal.

## Description

### Technical field

The present disclosure relates to a brazing system, a brazing method, and a program.

### Background Art

When joining metals such as pipes together, brazing is used, in which an alloy (hereinafter referred to as "brazing material"), having a lower melting point than the metals to be joined together, is melted and allowed to penetrate between the metals to be joined together.

In addition, there is an automatic brazing device that digitizes an image signal, capturing the light emitted from the part where metals to be joined together are brazed when the temperature of the part rises, determines the temperature of the brazing part from the brightness value of each pixel, and controls the brazing such that the temperature of the brazing part reaches a target value (see, for example, patent document 1).

### Citation List

### Patent Document

Patent Document 1: Japanese Unexamined Patent Application Publication No. 6-182531

### Summary of the Invention

### Problem to be Solved by the Invention

However, according to the technique disclosed in Patent Document 1, the temperature of the brazing part is estimated from an image capturing the brazing part. Since, however, the temperature cannot be detected accurately this way, there is still a problem that controlling the time required for brazing appropriately is difficult.

The present disclosure has been made in view of the foregoing and aims to providing a brazing system which controls brazing, and which, in particular, can control the time required for brazing appropriately.

### Means for Solving the Problem

The brazing system according to a first example of the present disclosure includes:
an image sensor configured to capture an image of a brazing material; and
a control unit configured to control brazing, and
the control unit generates brazing material information based on a shape of the brazing material in the image captured by the image sensor, detects completion of the brazing based on the brazing material information, and outputs a completion signal.

According to the first example of the present disclosure, completion of brazing is detected based on the shape of the brazing material, so that the time required for brazing can be controlled appropriately.

Based on the above-described brazing system of the first example, in a second example of the present disclosure, the control unit generates the brazing material information based on an image of the brazing material captured at present and an image of the brazing material captured in past.

According to the second example of the present disclosure, an image of the brazing material captured at present and an image of the brazing material captured in the past are used, so that it is possible to detect the molten state of the brazing material accurately and complete the heating appropriately.

Based on the above-described brazing system of the first example, in a third example of the present disclosure, the control unit generates the brazing material information from the captured image, the brazing material information including at least one of: characteristics of a shape of the brazing material; characteristics of changes in the shape; or a degree of completion of changes in the shape, and the control unit detects the completion of the brazing based on the brazing material information.

According to the third example of the present disclosure, completion of brazing is detected based on brazing material information, which includes at least one of: characteristics of the shape of the brazing material; characteristics of changes in the shape; or the degree of completion of change of the shape, so that the time required for brazing can be controlled even more appropriately.

Based on the above-described brazing system of the third example, in a fourth example of the present disclosure, the characteristics of the shape include shape information, which represents the shape of the brazing material, and brightness information, which represents a brightness of the brazing material.

Based on the above-described brazing system of the third or fourth example, in a fifth example of the present disclosure, the characteristics of changes in the shape represent a degree of change of the brazing material due to the brazing, and includes difference information representing a difference between a first image of the brazing material and a second image of the brazing material captured before the first image.

Based on the above-described brazing system of the fifth example, in a sixth example of the present disclosure, the degree of completion of changes in the shape represents a degree of the completion of the brazing of the brazing material, and includes cumulative difference information obtained by adding up the difference information acquired per image frame of the brazing material.

Based on one of the above-described brazing system of the first to sixth example, in a seventh example of the present disclosure, the control unit inputs the brazing material information into a machine learning model as input data and detects the completion of the brazing, the machine learning model being pre-trained using the brazing material information as features.

Based on the above-described brazing system of the seventh example, in an eighth example of the present disclosure, the machine learning model is pre-trained using the brazing material information and training data that indicates whether or not the brazing is completed.

Based on the above-described brazing system of the seventh or eighth example, in a ninth example of the present disclosure, the machine learning model is a degree-of-completion-of-brazing output model configured to receive the brazing material information as an input and output a degree of the completion of the brazing, and the control unit detects the completion of the brazing based on the degree of the completion of the brazing output from the degree-of-completion-of-brazing output model and a preset threshold.

Based on the above-described brazing system of one of the seventh to ninth examples, in a tenth example of the present disclosure, the control unit outputs control information for controlling an amount of heat to be applied during the brazing in accordance with the degree of the completion of the brazing.

Based on the above-described brazing system of one of the first to tenth examples, in an eleventh example of the present disclosure, when a method of brazing the brazing material is flame brazing, the control unit generates the brazing material information by removing information about fire from the image captured by the image sensor.

A twelfth of the present disclosure provides a brazing system including:
an image sensor configured to capture an image of a brazing material; and
a control unit configured to control brazing, and
the control unit generates brazing material information based on a shape of the brazing material in the image captured by the image sensor, detects completion of the brazing based on the brazing material information, and outputs a completion signal.

A thirteenth example of the present disclosure provides a program for use in a brazing system including:
an image sensor configured to capture an image of a brazing material; and
a control unit configured to control brazing, and the program causes the brazing system to operate such that the control unit generates brazing material information based on a shape of the brazing material in the image captured by the image sensor, detects completion of the brazing based on the brazing material information, and outputs a completion signal.

### Brief description of the drawings

[FIG. 1] FIG. 1 is a diagram that illustrates an example system structure of a brazing system according to one embodiment;
[FIG. 2] FIG. 2 is a diagram that illustrates an example hardware structure of an image processing device according to one embodiment;
[FIG. 3] FIG. 3 is a flowchart that illustrates an example brazing process according to a first embodiment;
[FIG. 4] FIG. 4 is a flowchart that illustrates an example of the degree-of-completion output process according to the first embodiment;
[FIG. 5A] FIG. 5A is a diagram (1) for explaining the degree-of-completion output process according to the first embodiment;
[FIG. 5B] FIG. 5B is a diagram (2) for explaining the degree-of-completion output process according to the first embodiment;
[FIG. 6] FIG. 6 is a diagram for explaining a machine learning model according to the first embodiment;
[FIG. 7] FIG. 7 is a flowchart that illustrates an example degree-of-completion output process according to a second embodiment;
[FIG. 8] FIG. 8 is a diagram for explaining a machine learning model according to the second embodiment;
[FIG. 9A] FIG. 9A is a flowchart (1) that illustrates an example degree-of-completion output process according to a third embodiment;
[FIG. 9B] FIG. 9B is a flowchart (2) that illustrates an example of the degree-of-completion output process according to the third embodiment; and
[FIG. 10] FIG. 10 is a diagram that illustrates an image of a joining part extraction process according to the third embodiment.

### DETAILED DESCRIPTION OF THE PREFERRED EMBODIMENTS

Embodiments of the present disclosure will be described below with reference to the accompanying drawings. Note that in this specification and the accompanying drawings, parts having substantially the same functions and structures are assigned the same reference numerals, so that redundant explanations will be omitted.

### <System Structure>

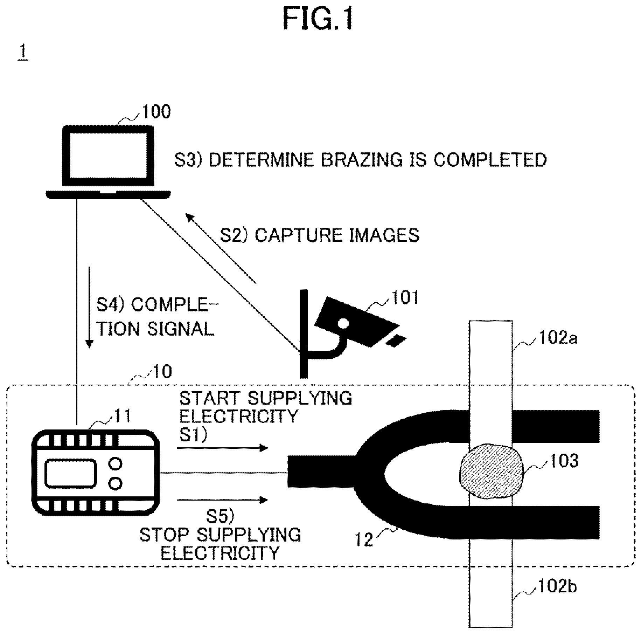

FIG. 1 is a diagram that illustrates an example system structure of a brazing system according to one embodiment. A brazing system 1 includes, for example, a brazing device 10, a camera 101, and an image processing device 100.

The brazing device 10 is, for example, a high-frequency brazing device (high-frequency induction heating device) that has a brazing control device 11 and a heat coil 12, and that brazes base materials such as pipes 102a and 102b by heating the brazing material 103 by applying an alternating current to the heat coil 12. However, the brazing device 10 is by no means limited to this, and may be, for example, a flame brazing device that heats the brazing material with a flame. The following description will be given on the assumption that the brazing device 10 is a high-frequency brazing device.

Brazing is a technique for joining metals together, and involves melting an alloy (brazing material) having a lower melting point than the metals to be joined together (base materials) and allowing the melted alloy to penetrate between the base materials, thereby joining the metals together without melting the base materials. Here, the following description will be given on the assumption that the brazing device 10 brazes together the two pipes 102a and 102b, which are examples of base materials, with a brazing material 103. To illustrate a specific example, air conditioner parts are examples of objects subject to brazing. Although the base materials in the following description are, for example, aluminum, other metals may be used as well.

The camera (image sensor) 101 is an example of an image sensor that captures images of the brazing materials 103. Although the camera 101 here is, for example, one having a light receiving sensitivity band in the visible range, but other type of cameras may be used as well. The camera 101 is installed in a position where it can capture images of the brazing/job site including the pipes 102a and 102b to be brazed together by the brazing device 10, and the brazing material 103, and captures images of the pipes 102a and 102b to be brazed together and the brazing material 103. In addition, the camera 101 is communicatively connected to the image processing device 100 and transmits captured images to the image processing device 100.

The image processing device 100 is communicatively connected to the camera 101 and the brazing control device 11, and detects the completion of brazing based on the shape of the brazing material 103 in images captured by the camera 101, the brightness of the brazing material 103, or the shape and brightness of the brazing material 103.

### (Processing overview)

Now, an overview of the brazing system 1 will be described. The brazing control device 11 starts supplying electricity to the heat coil 12 in response to, for example, a brazing start operation by a worker or the like (step S1). This causes the heat coil 12 to start heating the brazing material 103.

The camera 101 captures images of the pipes 102a and 102b to be brazed together and the brazing material 103, and transmits the captured images to the image processing device 100 (step S2).

The image processing device 100 determines that the brazing is completed based on, for example, the shape of the brazing material 103 in images captured by the camera 101 (step S3). Note that the image processing device 100 may determine that the brazing is completed based on the brightness of the brazing material instead of (or in addition to) the shape of the brazing material. Note that specific methods of detecting the completion of brazing will be described later with reference to several embodiments.

Furthermore, when the image processing device 100 determines that the brazing is completed, a "completion signal," which indicates that the brazing is completed, to the brazing control device 11 (step S4). Upon receiving the completion signal from the image processing device 100, the brazing control device 11 stops the supply of electricity to the heat coil 12.

For example, referring back to the technique disclosed in Patent Document 1, although the temperature of the brazing part is estimated from an images in which the brazing part is captured, it is still difficult to estimate the temperature accurately this way, leaving it difficult to control the time required for brazing appropriately.

Now, by contrast with this, the brazing system 1 of the present embodiment detects the completion of brazing based on the shape of the brazing material 103 (or the brightness of the brazing material 103). The shape of the brazing material 103 (or the brightness of the brazing material 103) allows the temperature of the brazing part to be detected with high accuracy, so that the brazing system 1 according to the present embodiment makes it possible to control the time required for brazing more appropriately.

### <Hardware structure>

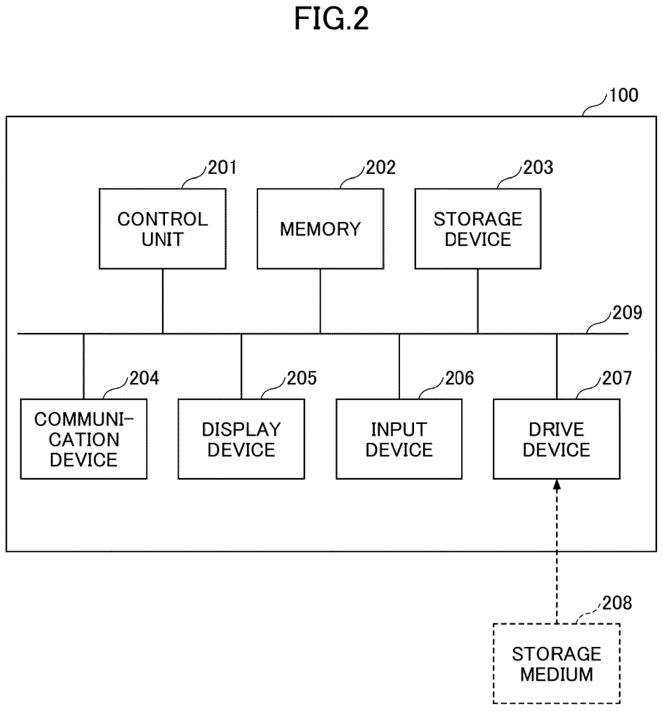

FIG. 2 is a diagram that illustrates an example hardware structure of an image processing device according to one embodiment. The image processing device 100 has a typical computer's structure, and includes, for example, a control unit 201, a memory 202, a storage device 203, a communication device 204, a display device 205, an input device 206, a drive device 207, a bus 209, and so forth.

The control unit 201 is, for example, a processor such as a CPU (Central Processing Unit) that implements various functions by running predetermined programs stored in storage media such as the storage device 203, the memory 202, and so forth. Note that, in addition to the CPU, the control unit 201 may also include a processor such as a GPU (Graphics Processing Unit), a DSP (Digital Signal Processor), or the like. Furthermore, the control unit 201 may be a device such as an ASIC (Application-Specific Integrated Circuit), an FPGA (Field Programmable Gate Array), or the like.

The memory 202 includes, for example, a RAM (Random Access Memory), which is a volatile memory used as a work area for the control unit 201, a ROM (Read Only Memory), which is a non-volatile memory that stores programs for starting up the control unit 201, and so forth. The storage device 203 is a large-capacity storage device that stores the OS (Operating System), programs such as applications, various types of data and information, and so forth, and is implemented by, for example, an SSD (Solid State Drive), an HDD (Hard Disk Drive), or the like.

The communication device 204 is, for example, a communication interface or a device for communicating with the camera 101, the brazing control device 11, and so forth. For example, the communication device 204 may be a device such as a NIC (Network Interface Card) for allowing the image processing device 100 to access a communication network 2 and communicate with other devices. Furthermore, the communication device 204 may refer to, for example, a variety of interfaces for connecting the camera 101 or the brazing control device 11 to the image processing device 100.

The display device 205 is a display device that displays a display screen. The input device 206 is an input device that receives inputs from external devices such as a touch panel, a keyboard, a pointing device, and so forth. Note that the display device 205 and the input device 206 may be integrated to serve as a display/input device like a touch panel display.

The drive device 207 is a device for connecting the storage medium 208 to the image processing device 100. The storage medium 208 here includes, for example, a medium for recording information optically, electrically or magnetically, such as a CD-ROM, a flexible disk, a magneto-optical disk, and so forth. The storage medium 208 may also include a semiconductor memory that records information electrically, such as a ROM or a flash memory. The bus 209 is inter-connects the individual components described above, and transmits, for example, address signals, data signals, various control signals, and so forth.

### <Process flow>

Next, the flow of the process of the brazing method according to the present embodiment will be described.

### [First Embodiment]

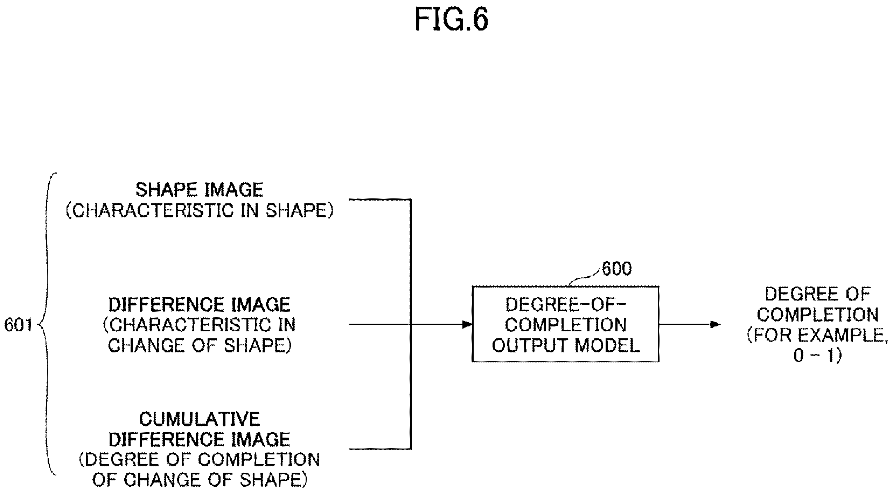

FIG. 6 is a flowchart that illustrates an example brazing process according to the first embodiment. This process is an example of the brazing process executed by the brazing system 1.

### (Process in image processing device)

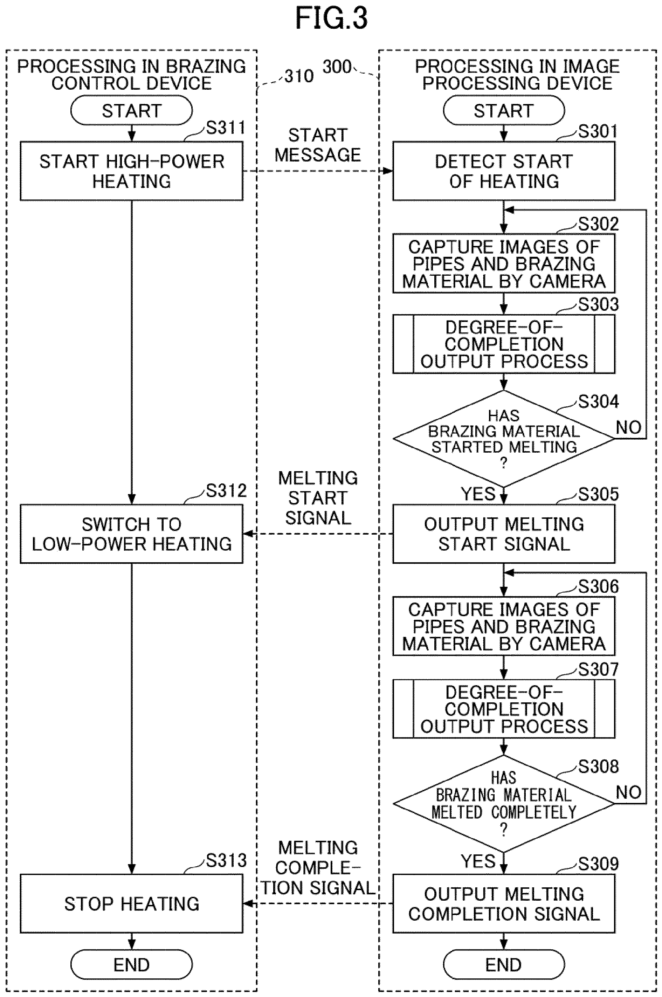

The process 300 in the image processing device shown in FIG. 3 shows the flow of steps that the image processing device 100 having the hardware structure shown in FIG 2 performs. This process is implemented by, for example, a program executed by the control unit 201.

In step S301, when the control unit 201 of the image processing device 100 detects the start of heating by the brazing device 10, the control unit 201 executes the process of step S302 and subsequent steps. The control unit 201 detects the start of heating by the brazing device 10 based on, for example, a start message that the brazing control device 11 outputs when heating is started.

In step S302, the control unit 201 captures images of the pipes 102a and 102b to be brazed together, and the brazing material 103, using the camera 101.

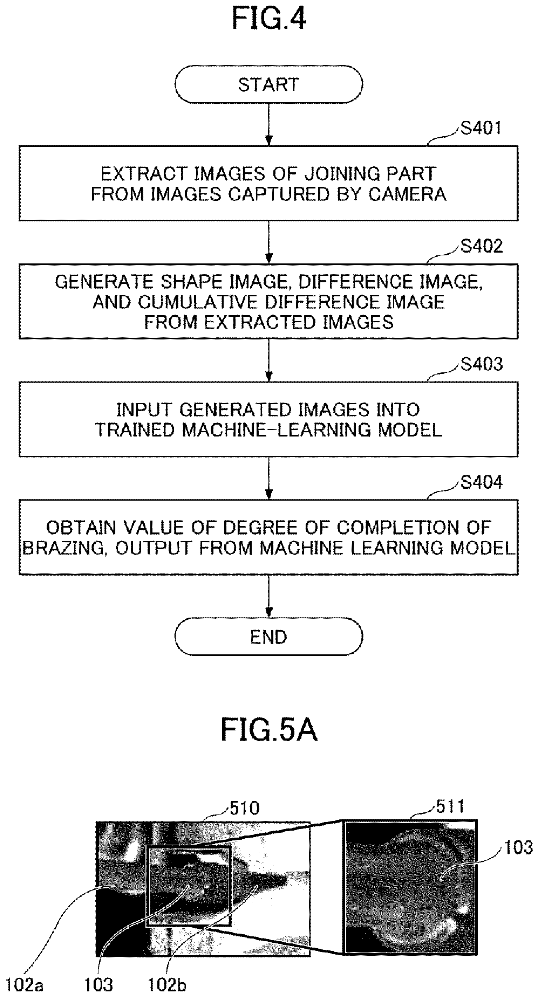

In step S303, the control unit 201 performs a degree-of-completion output process to obtain a value that represents the degree of completion of brazing, based on images captured by the camera 101. For example, the control unit 201 executes the degree-of-completion output process as shown in FIG. 4.

FIG. 4 is a flowchart that illustrates an example of the degree-of-completion output process according to the first embodiment. This process is an example of the degree-of-completion output process executed by the control unit 201 in steps S303 and S307 in FIG. 3.

In step S401, the control unit 201 extracts the part subject to brazing and joining, from images of the brazing material 103 captured by the camera 101. For example, as shown in FIG. 5A, an image 510 captured by the camera 101 includes the pipes 102a and 102b, the brazing material 103, the background, and so forth. The control unit 201 extracts (cuts out) an image 511 of the joining part (the brazing material 103 and the surroundings of the brazing material 103) from the captured image 510.

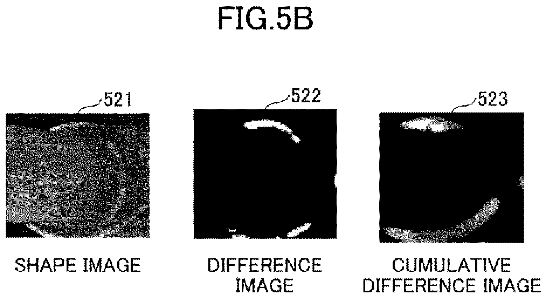

In step S402, the control unit 201 generates (creates), for example, a shape image 521, a difference image 522, and a cumulative difference image 523, from the extracted image 511, as shown in FIG. 5B. The shape image 521 is an image that shows the characteristics of the shape of the brazing material 103. The control unit 201 may directly use the extracted image 511 as the shape image 521, or generate the shape image 521 by extracting only the shape information by, for example, an edging process. Alternatively, the control unit 201 may generate a shape image 521 by adjusting the extracted image 511's brightness, contrast, color, etc. The control unit 201 stores the shape image 521 generated thus in, for example, the storage device 203 or a storage unit such as the memory 202.

The difference image 522 is an image that shows characteristics of changes in the shape of the brazing material 103. The control unit 201 generates a difference image that shows differences between, for example, the shape image 521 previously generated in step S303 of FIG. 3 and the shape image 521 generated at present (the differences including, for example, the difference between pixel values, the difference between brightness values, etc.), and stores the difference image in the storage unit or the like. Note that difference image 522 shows the degree of change of the brazing material due to brazing. That is, the difference image 522 is an example of difference information that shows differences between a first image of the brazing material and a second image of the brazing material taken before the first image is taken.

The cumulative difference image 523 is an image that shows the degree of completion of changes in the shape of the brazing material 103. The control unit 201 generates a cumulative difference image 523 by, for example, accumulating and adding up the difference images 522 stored in the storage unit, and stores the cumulative difference image 523 in the storage unit or the like. Note that the cumulative difference image 523 is an example of cumulative difference information that is obtained by adding up the difference information obtained per image frame in which brazing material is captured.

In step S403, the control unit 201 inputs the shape image 521, difference image 522, and cumulative difference image 523 generated thus, into a trained machine learning model (degree-of-completion output model).

In step S404, the control unit 201 obtains a value that represents the degree of completion of brazing, output from the machine learning model.

FIG. 6 is a diagram for explaining the machine learning model according to the first embodiment. The brazing system 1 includes a degree-of-completion output model 600, which is pre-trained using brazing material information 601 as input data. The brazing material information 601 includes: a shape image 521, which shows characteristics in shape; a difference image 522, which shows characteristics of changes in shape; and a cumulative difference image 523, which shows the degree of completion of change of shape.

The degree-of-completion output model 600 is a machine learning model (regression model) that is pre-trained (i.e. deep learning) using a large amount of brazing material information 601, each of which shows a different degree of melting of the brazing material 103, and training data that indicates whether or not brazing is completed. The control unit 201 can obtain a value (which may be, for example, 0, 1, etc.) representing the degree of completion of brazing by inputting the brazing material information 601 generated thus, into the trained degree-of-completion output model 600.

The value that represents the degree of completion of brazing shows, for example, the similarity between the brazing material information 601 when brazing is completed and the input brazing material information 601. Here, for example, "0" indicates the lowest similarity (brazing is not completed), and "1" indicates the highest similarity (brazing is completed). The control unit 201 can determine the degree of completion of brazing by comparing the value output from the degree-of-completion output model 600 against a preset threshold.

Note that the brazing material information 601 described above with reference to FIG. 6 is only one example. The brazing material information 601 may include at least one of a shape image 521, a difference image 522, and a cumulative difference image 523. For example, depending on the application of the degree-of-completion output model 600 and the accuracy required, one or more of the shape image 521, the difference image 522, and the cumulative difference image 523 may be omitted from The brazing material information 601. For example, when the degree-of-completion output model 600 is used only to detect the completion of brazing, the brazing material information 601 may include the shape image 521 and the cumulative difference image 523 alone, include the cumulative difference image 523 alone, and so forth.

Now, returning to FIG. 3, the process 300 in the image processing device will be described. In step S304, the control unit 201 determines whether or not the brazing material 103 has started melting, based on a value that represents the degree of completion of brazing, obtained in the degree-of-completion output process shown in FIG. 4. For example, when the value that represents the degree of completion of brazing exceeds a predetermined first threshold, the control unit 201 determines that the brazing material 103 has started melting. The first threshold is a value that is set in advance to determine that the brazing material 103 has started melting.

When the brazing material starts melting, the control unit 201 moves the process on to step S305. On the other hand, if the brazing material has not started melting, the control unit 201 brings back the process to step S302.

In step S305, the control unit 201 outputs a "melting start signal," which indicates that the brazing material has started melting, to the brazing control device 11. Note that the melting start signal is an example of control information that controls the amount of heat applied during brazing.

In step S306, the control unit 201 captures images of the pipes 102a and 102b to be brazed together, and the brazing material 103, by the camera 101.

In step S307, the control unit 201 performs a degree-of-completion output process to obtain a value that represents the degree of completion of brazing, based on images captured by the camera 101. For example, the control unit 201 performs, again, the degree-of-completion output process described above with reference to FIG. 4.

In step S308, the control unit 201 determines whether or not the brazing material 103 has melted completely based on the value that represents the degree of completion of brazing obtained in the degree-of-completion output process. For example, the control unit 201 determines that the brazing material 103 has melted completely when a value that represents the degree of completion of brazing exceeds a predetermined second threshold. Here, the second threshold is a value that is set in advance to determine whether the brazing material 103 has melted completely.

When the brazing material 103 has melted completely, the control unit 201 moves the process to step S309. On the other hand, if the brazing material 103 has not melted completely, the control unit 201 brings back the process to step S306.

In step S309, the control unit 201 outputs a "melting completion signal," which indicates that the brazing material 103 has melted completely, to the brazing control device 11. Note that the melt completion signal is another example of control information that controls the amount of heat applied during brazing.

As a consequence of the above process, the image processing device 100 can detect the completion of brazing based on the shape of the brazing material in images captured by the camera 101, and output a completion signal.

### (Process in brazing control device)

The process 310 of the brazing control device 11 shows an example of processing that the brazing control device 11 performs and that corresponds to the process 300 in the image processing device described hereinabove.

In step S311, when the brazing control device 11 starts heating the brazing material 103 at high power in response to a start operation by a worker or the like, the brazing control device 11 sends a start message, which indicates that heating has started, to the image processing device 100.

In step S312, upon receiving the melting start signal from the image processing device 100, the brazing control device 11 switches the heating by the brazing material 103 to low-power heating.

In step S313, upon receiving a melting completion signal from the image processing device, the brazing control device 11 stops heating the brazing material 103.

The process of FIG. 3 allows the brazing system 1 to control the time required for brazing more appropriately. Note that, in the process of FIG. 3, steps S302 to S305 are optional. For example, the brazing control device 11 may switch the heating from high power to low power using a timer or the like, without relying on the melting start signal from the image processing device 100. In this case, steps S302 to S305 may be omitted.

### [Second embodiment]

With a second embodiment of the present disclosure, another example of the degree-of-completion output process that the image processing device 100 performs in steps S303 and S307 of FIG. 3 will be described.

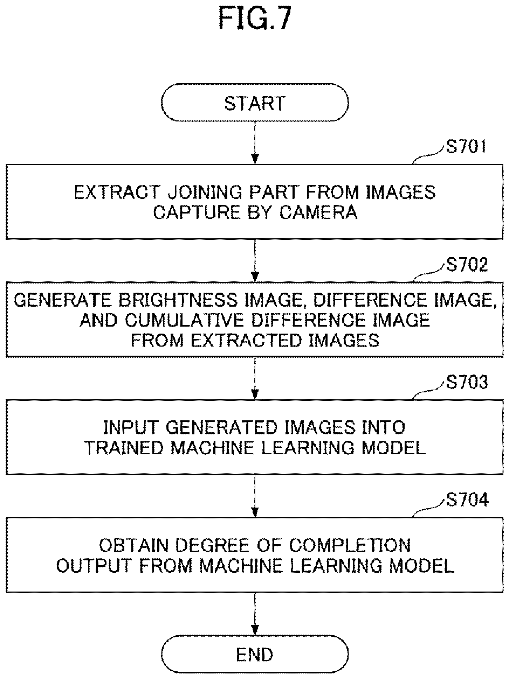

FIG. 7 is a flowchart that illustrates an example of the degree-of-completion output process according to the second embodiment. Note that the basic details of the process are the same or substantially the same as the degree-of-completion output process according to the first embodiment, described above with reference to FIG. 4, and so parts of the process that are the same or substantially the same as in the first embodiment will not be described in detail below.

In step S701, from the images of the pipes 102a and 102b to be brazed together and the brazing material 103, taken by the camera 101, the control unit 201 extracts the part subject to brazing and joining. Note that this process may be the same or substantially the same as the process of step S401 in FIG. 4.

In step S702, the control unit 201 generates a brightness image, a difference image, and a cumulative difference image from the extracted image 511.

The brightness image is an image that shows the brightness of the brazing material 103. For example, the control unit 201 extracts only the brightness information from the extracted image 511, and creates the brightness image based on this. Furthermore, the control unit 201 stores the generated brightness image in a storage unit such as the storage device 203 or the memory 202.

The difference image, according to the second embodiment, is an image that shows characteristics of changes in the brightness of the brazing material 103. The control unit 201 generates a difference image, which shows the difference between the brightness image previously generated in step S303 of FIG. 3 and the latest brightness image generated at present (the differences including, for example, the difference between brightness values, etc.), and stores the difference image in the storage unit or the like.

The cumulative difference image according to the second embodiment is an image that shows the degree of completion of change of the brightness of the brazing material 103. The control unit 201 generates a cumulative difference image by, for example, accumulating and adding up the difference images stored in the storage unit or the like, and stores the cumulative difference image in the storage unit or the like.

In step S703, the control unit 201 inputs the brightness image, difference image, and cumulative difference image generated thus, into a trained machine learning model (degree-of-completion output model).

In step S704, the control unit 201 obtains a value that represents the degree of completion of brazing output from the machine learning model.

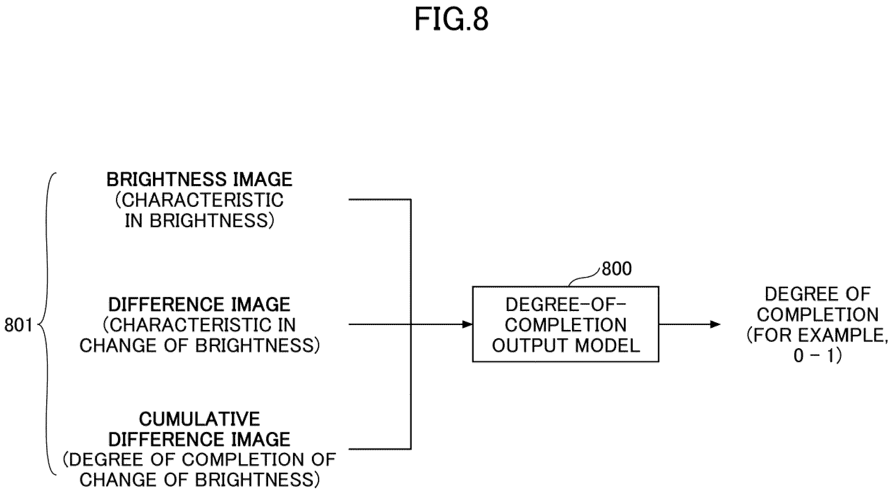

FIG. 8 is a diagram for explaining a machine learning model according to the second embodiment. The brazing system 1 includes a degree-of-completion output model 800, which is pre-trained using brazing material information 801 as input data. The brazing material information 801 includes: a brightness image, which shows characteristics in brightness; a difference image, which shows characteristics of changes in brightness; and a cumulative difference image, which shows the degree of completion of changes in brightness.

The degree-of-completion output model 800 is a machine learning model (regression model) that is pre-trained (i.e. deep learning) using a large amount of brazing material information 801, each of which shows a different degree of melting of the brazing material 103, and training data that indicates whether or not brazing is completed. The control unit 201 can obtain a value (which may be, for example, 0, 1, etc.) representing the degree of completion of brazing by inputting the brazing material information 801 generated thus, into the trained degree-of-completion output model 800.

The value that represents the degree of completion of brazing shows, for example, the similarity between the brazing material information 801 when brazing is completed and the input brazing material information 801. Here, for example, "0" indicates the lowest similarity (brazing is not completed), and "1" indicates the highest similarity (brazing is completed). The control unit 201 can determine the degree of completion of brazing by comparing the value output from the degree-of-completion output model 600 against a preset threshold.

Note that the brazing material information 801 described above with reference to FIG. 8 is only one example. The brazing material information 801 may include at least one of a brightness image, a difference image, and a cumulative difference image. For example, depending on the application of the degree-of-completion output model 800 and the accuracy required, one or more of the brightness image, the difference image, and the cumulative difference image may be omitted from the brazing material information 801.

As a consequence of the process of FIG. 7, the image processing device 100 can detect the completion of brazing based on the brightness of the brazing material in images captured by the camera 101, and output a completion signal.

Note that the second embodiment can be used in combination with the first embodiment. For example, in step S702 of FIG. 7, the control unit 201 may generate the shape image 521, the difference image 522, and the cumulative difference image 523 of the first embodiment, in addition to the brightness image, the difference image, and the cumulative difference image of the second embodiment.

In this case, in step S703 of FIG. 7, brazing material information 601 and 801 may be input to a degree-of-completion output model that is pre-trained using the brazing material information 601 according to the first embodiment and the brazing material information 801 according to the second embodiment as input data. By this means, in step S704 of FIG. 7, it is possible to obtain a degree of completion of brazing that is estimated with higher accuracy.

### [Third embodiment]

In each of the above embodiments, the brazing device 10 has been described as a high-frequency brazing device. However, the present disclosure is by no means limited to this, and the brazing device 10 can also be applied to, for example, a flame brazing device that heats and brazes the brazing material with a flame.

In the event the brazing device 10 is a flame brazing device, the images captured by the camera 101 show the pipes 102a and 102b to be brazed together, the brazing material 103, and the flame for brazing. The image processing device 100 can determine the degree of completion of brazing in substantially the same manner as in the first and second embodiments, by removing the brazing fire's information from the images captured by the camera 101.

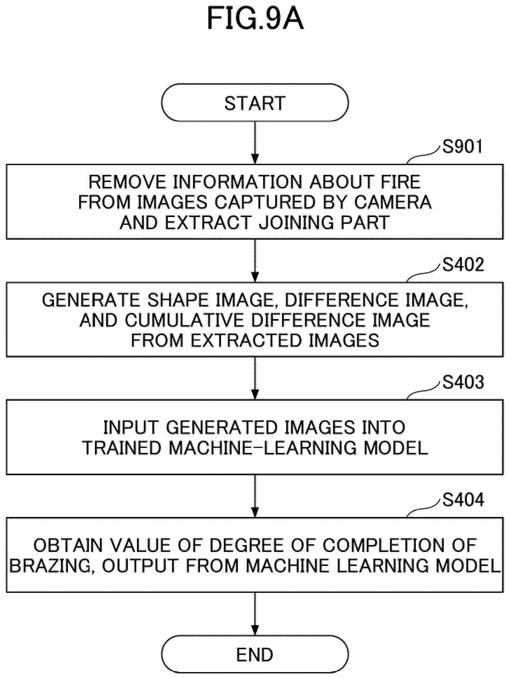

FIG. 9A shows an example of the degree-of-completion output process according to a third embodiment. This process is an example in which the degree-of-completion output process according to the first embodiment, described above with reference to FIG. 4, is applied to a flame brazing device.

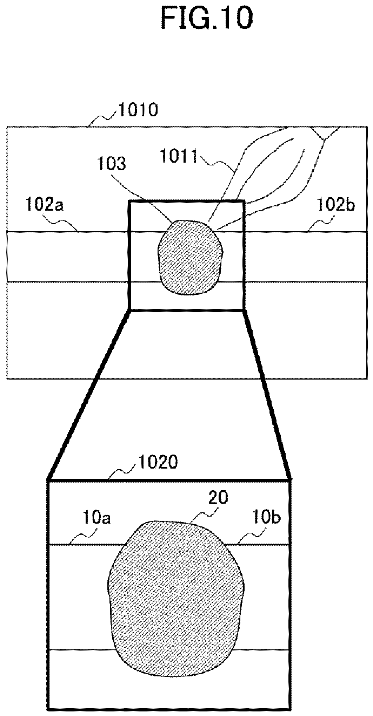

In step S901, the control unit 201 removes the information about the fire of the flame brazing device from the images of the pipes 102a and 102b to be brazed together and the brazing material 103, captured by the camera 101, and extracts the part subject to brazing and joining. For example, as shown in FIG. 10, an image 1010 captured by the camera 101 shows the pipes 102a and 102b, the brazing material 103, and shows, additionally, the fire 1011 generated by the flame brazing device. Using the color information, the control unit 201 removes the fire 1011's information from the captured image 1010 and extracts (cuts out) the image 1020 of the joining part (the brazing material 103 and the surroundings of the brazing material 103) .

For example, since the color of the fire 1011 depends on the temperature of the fire 1011 , the control unit 201 may remove the information of the fire 1011 from the captured image 1010 by removing the color corresponding to the temperature of the fire 1011 from the captured image 1010.

The control unit 201 performs the process of steps S402 to S404 in substantially the same manner as in the first embodiment, using the image 1020 obtained by removing the information of the fire 1011 from the captured image 1010.

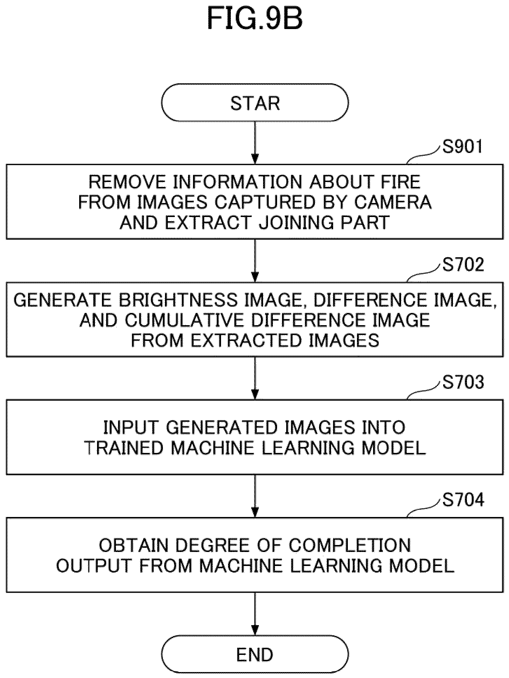

FIG. 9B shows another example of the degree-of-completion output process according to the third embodiment. This process is an example in which the degree-of-completion output process according to the second embodiment, described earlier with reference to FIG. 7, is applied to a flame brazing device.

In this case, by executing the process of step S901 shown in FIG. 9A instead of the process of step S701 in FIG. 7, the process of steps S702 to S704 can be performed in substantially the same manner as in the second embodiment.

In this way, by performing the degree-of-completion output process shown in FIG. 9A or FIG. 9B in steps S303 and S307 of FIG. 3, the brazing system 1 can control the time required for brazing by the flame brazing device appropriately.

According to each embodiment of the present disclosure, in a brazing system for controlling brazing, the time required for brazing can be controlled appropriately.

For example, according to the technique disclosed in Patent Document 1, the temperature of the brazing part is estimated from an image capturing the brazing part. Since, however, the temperature cannot be detected accurately this way, there is still a problem that controlling the time required for brazing appropriately is difficult.

By contrast with this, the brazing system 1 of the each embodiment of the present disclosure detects the completion of brazing based on the shape or brightness of the brazing material. The shape of the brazing material or the brightness of the brazing material allows the temperature of the brazing part to be detected with high accuracy, so that the brazing system 1 makes it possible to control the time required for brazing more appropriately.

Although embodiments of the present disclosure have been described above, it should be understood that a variety of changes in form and details can be made without departing from the spirit and scope of the present disclosure as recited in the accompanying claims.

This application is based on and claims priority to Japanese Patent Application No. 2022-045173, filed on March 22, 2022 with the Japan Patent Office, the entire contents of which are incorporated herein by reference.

### Reference Signs List

1 Brazing system
10 Brazing device
11 Brazing control device
12 Heat coil
100 Image processing device
101 Camera (image sensor)
102a, 102b Pipe
103 Brazing material
201 Control unit
501 Captured image
600, 800 Degree-of-completion output model (machine learning model)
601, 801 Brazing material information

## Claims

1. A brazing system comprising:
an image sensor configured to capture an image of a brazing material; and
a control unit configured to control brazing,
wherein the control unit generates brazing material information based on a shape of the brazing material in the image captured by the image sensor, detects completion of the brazing based on the brazing material information, and outputs a completion signal.

2. The brazing system according to claim 1,
wherein the control unit generates the brazing material information based on an image of the brazing material captured at present and an image of the brazing material captured in past.

3. The brazing system according to claim 1, wherein the control unit generates the brazing material information from the captured image, the brazing material information including at least one of:
characteristics of a shape of the brazing material;
characteristics of changes in the shape; or
a degree of completion of changes in the shape, and
wherein the control unit detects the completion of the brazing based on the brazing material information.

4. The brazing system according to claim 3,
wherein the characteristics of the shape include shape information, which represents the shape of the brazing material, or brightness information, which represents a brightness of the brazing material.

5. The brazing system according to claim 3 or claim 4, wherein the characteristics of changes in the shape represent a degree of change of the brazing material due to the brazing, and includes difference information representing a difference between a first image of the brazing material and a second image of the brazing material captured before the first image.

6. The brazing system according to claim 5,
wherein the degree of completion of changes in the shape represents a degree of the completion of the brazing of the brazing material, and includes cumulative difference information obtained by adding up the difference information acquired per image frame of the brazing material.

7. The brazing system according to any one of claim 1 to claim 6, wherein the control unit inputs the brazing material information into a machine learning model as input data and detects the completion of the brazing, the machine learning model being pre-trained using the brazing material information as features.

8. The brazing system according to claim 7,
wherein the machine learning model is pre-trained using the brazing material information and training data that indicates whether or not the brazing is completed.

9. The brazing system according to claim 7 or claim 8,
wherein the machine learning model is a degree-of-completion-of-brazing output model configured to receive the brazing material information as an input and output the degree of the completion of the brazing, and
wherein the control unit detects the completion of the brazing based on the degree of the completion of the brazing output from the degree-of-completion-of-brazing output model and a preset threshold.

10. The brazing system according to any one of claim 6 to claim 9, wherein the control unit outputs control information for controlling an amount of heat to be applied during the brazing in accordance with the degree of the completion of the brazing.

11. The brazing system according to any one of claim 1 to claim 10, wherein, when a method of brazing the brazing material is flame brazing, the control unit generates the brazing material information by removing information about fire from the image captured by the image sensor.

12. A brazing system comprising:
an image sensor configured to capture an image of a brazing material; and
a control unit configured to control brazing,
wherein the control unit generates brazing material information based on a shape of the brazing material in the image captured by the image sensor, detects completion of the brazing based on the brazing material information, and outputs a completion signal.

13. A program which, when executed in an brazing system including: an image sensor configured to capture an image of a brazing material; and a control unit configured to control brazing, causes the brazing system to:
capture, by the image sensor, an image of a brazing material;
generate brazing material information based on a shape of the brazing material in the image captured by the image sensor;
detect completion of the brazing based on the brazing material information; and
output a completion signal.
